Europäisches Patentamt

European Patent Office

Office européen des brevets

(19)

(11) Publication number: **0 048 226**
**B1**

(12) # EUROPEAN PATENT SPECIFICATION

(45) Date of publication of patent specification: **11.07.84**

(51) Int. Cl.³: **B 01 J 2/30, C 05 G 3/00**

(21) Application number: **81850134.8**

(22) Date of filing: **13.08.81**

(54) **Anti-caking agent, a process for its production and its use.**

(30) Priority: **11.09.80 SE 8006345**

(43) Date of publication of application:
**24.03.82 Bulletin 82/12**

(45) Publication of the grant of the patent:
**11.07.84 Bulletin 84/28**

(84) Designated Contracting States:
**AT BE DE FR GB IT NL**

(56) References cited:
**DE - A - 1 667 648**
**FR - A - 1 314 559**
**FR - A - 2 088 387**
**FR - A - 2 155 883**
**FR - A - 2 187 403**
**GB - A - 935 999**
**LU - A - 58 594**
**US - A - 3 305 491**

(73) Proprietor: **KenoGard AB**
**Box 11033**
**S-100 61 Stockholm (SE)**

(72) Inventor: **Rosenblom, Jan**
**Björkholmsvägen 188**
**S-132 00 Saltsjö-Boo (SE)**

(74) Representative: **Schöld, Zaid**
**c/o KemaNobel AB Patents Box 11065**
**S-100 61 Stockholm (SE)**

Courier Press, Leamington Spa, England.

# 0 048 226

## Description

The present invention relates to an agent for the treatment of products which tend to cake, particularly for the treatment of fertilizers, in order to make these products free-flowing and non-dusting. More particularly the invention relates to such an agent which comprises both an inorganic powder material and organic compounds and which agent is in the form of prills, granules or the like. The invention also relates to a process for the production of the agent and to the use of the agent for anti-caking treatment of fertilizers.

It is well-known to treat salts and fertilizers containing water-soluble salts to prevent them from caking during storage, transport and handling. Anti-caking treatment can be carried out either with solid or liquid agents and in one or several steps. Different types of organic surface active compounds, such as fatty amines, salts of fatty amines, sulphonates etc. have since long been used for anti-caking treatment. Further, inorganic powder materials, such as talcum, lime and clay, have been used to a great extent, as they are advantageous from an economical point of view. The inorganic materials are generally used in combination with organic surface active compounds. However, one disadvantage in using powders is that they often give rise to serious dusting problems.

According to the present invention it has been found that an agent having extremely satisfactory anti-caking effect and which does not give rise to annoying dusting problems is obtained by a combination of inorganic powder material, wax and mixtures of fatty amines and fatty acids, which composition is in the form of prills or granules.

The inorganic powder in the present anti-caking agents is completely mixed into the organic phase and the composition is converted into particle form, e.g. to prills or granules, by means of a special treatment step. The present anti-caking agents are non-dusting in themselves, and can be handled, transported and applied without dust-problems. Products with a tendency to caking have a very low tendency to dusting after having been treated with the present agents.

The agents according to the invention contain 20—60 percent by weight of an inorganic powder material, 20—60 percent by weight of a mixture of a cationic fatty amine and a fatty acid, whereby the mole ratio of amine to fatty acid is within the range 80:20 to 30:70, 10—35 percent by weight of a wax and 0—20 percent of a fatty amide.

By the above given combination of specific components in specific amounts an agent is obtained which gives surprisingly good anti-caking effect, and products treated with the agents have a considerably reduced tendency to dusting. The selected components and their amounts make a complete mixing of the inorganic material into the organic phase possible, and makes a conversion of the composition to particle form possible. The agent is solid at room temperature and, owing to the complete mixing of the inorganic material into the organic phase, the agent has a very good stability to decomposition.

Any known powder material can be used in the present agent, e.g. kieselguhr, talcum, clays or mixtures thereof. The particle size of the powder material is not of a critical importance. It is, however, suitable that 50 percent of the material has a diameter below 40 $\mu$m and preferably 50 percent of the material has a diameter below 20 $\mu$m. A high content of inorganic material is, of course, preferable from an economical point of view. Too high contents may, however, give problems at the production of the agents, reduce their storage stability and cause dusting and the content should thus not exceed 60 percent by weight. The content should be within the range 20 to 60 percent by weight and preferably within the range 35 to 50 percent by weight, based on the total composition.

A mixture of amine and fatty acid is present in the agents in amounts of 20 to 60 and preferably 30 to 35 percent by weight. The amines are monoamines or diamines of the general formula $RNH_2$ or $RNH(CH_2)_nNH_2$ wherein R is an aliphatic, hhdrophobic, hydrocarbon group having at least 12 carbon atoms, suitably 12 to 24, and preferably 16 to 20 carbon atoms, and n is an integer of 1 to 5, preferably 2. The hydrophobic group can be straight or branched, saturated or unsaturated. It is preferred that R is an alkyl group and monoamines of the above given formula are preferred to the diamines. As examples of suitable amines can be mentioned tetradecylamine, hexadecylamine, octadecylamine and eicosylamine. Particularly suitable are the commercial amines which are mixtures of amines having varying carbon chain lengths and which are obtained from different animal and vegetable fats and oils, for example from tallow.

The fatty acids in the agents contain an aliphatic, hydrophobic group having at least 6 carbon atoms, suitably 6 to 24 and preferably 14 to 22 carbon atoms. The hydrophobic group can be straight or branched, saturated or unsaturated. Saturated fatty acids are preferred. As examples of suitable fatty acids can be mentioned lauric acid, palmitic acid and stearic acid.

Mixtures of amines and fatty acids as above are present in the anti-caking agents of the invention and the mole ratio of amine to fatty acid is within the range 80:20 to 30:70. It is preferred to use about equimolar amounts of amine and fatty acid, or to have only a minor excess of amine or fatty acid, and the mole ratio is thus suitably within the range 70:30 and 40:60 and preferably within the range 60:40 to 40:60. When the term "mixture" of amine and fatty acid is used herein it should be understood that these to a certain extent, depending on the molecular ratio, are present in salt form. The term mixture thus also includes fatty acid salts of amines, and optional excess of one or the other of the components.

2

The agents contain 10 to 35, and preferably 10 to 25 percent by weight of a wax. As wax material it is possible to use polyolefins, such as polyethylene, natural or synthetic paraffin waxes, microcrystalline waxes and mixtures of such waxes. The waxes can be oxidized or modified. Part of the wax can also be replaced by fatty amides, i.e. amides of the general formula $RCONH_2$, which contain a hydrophobic group corresponding to those defined for the amines in the agents. Amides can hereby be present in a weight ratio of up to 2:1 with respect to the wax. The wax should suitably have a melting point below 120°C. The wax is selected with respect to suitable viscosity at the following conversion of the total composition into prills or granules and with respect to the required melting point for the total composition, at the treatment of the products which tend to cake.

The agents according to the invention can be prepared by mixing the components at a temperature above the melting point of the organic compounds in order to obtain an intimate, molten-down, mixture of these and the inorganic material. When the components are warmed, a salt is generally formed of the amine and the fatty acid. The obtained mixture is then converted to a particulate form, e.g. to granules, prills or pellets, and this can e.g. be carried out by treatment in a granulator or spraying in a cooling tower for the formation of prills. At the blending of the components, coloring agents or fluorescent agents can, if desired, be introduced into the anti-caking agents. The obtained particulate anti-caking agent should suitably have a diameter exceeding 0.4 mm. The diameter should not be greater than 4 mm.

The agents according to the invention are mainly used for treatment of fertilizers. Treatment of fertilizers with anti-caking agents according to the invention is suitably carried out at a temperature above the melting point of the agents and the agents are suitably applied to warm fertilizers to melt out on these, and this could e.g. be carried out in a drum. It is of course also possible to apply the agents in other manners, it is e.g. possible to cover the inner side of the treating drum, into which the fertilizer is introduced, with molten anti-caking agent. The amount of anti-caking agent required to obtain a satisfactory effect will, of course, vary with the composition of the fertilizers and their tendency to caking. Amounts within the range 0.03 to 0.4 percent by weight, based on the fertilizer, can for example be used. Amounts within the range of 0.08 to 0.20 percent by weight are used in most cases. Fertilizers, and other salts, treated with the agents of the invention have improved storage capability and reduced tendency to dusting, and, at the same time, the agents themselves do not give rise to dusting and they can, owing to their specific form, be handled and metered out in a simple manner.

The invention also relates to a process for the production of the agents and to the use of the agents, in accordance with what has been said above and as defined in the claims.

The invention is further illustrated in the following examples which, however, are not intended to limit the same. Parts and percent relate to parts by weight and percent by weight respectively, unless otherwise stated.

Example 1

A mixture of 21 percent by weight of fatty amine having a carbon chain length of $C_{16-18}$, 24 percent by weight of technical stearic acid and 25 percent by weight of polyethylene wax was melted in a reactor at 90°C during vigorous stirring. 30 percent by weight of talcum were then added at continued stirring and the obtained mixture was sprayed in a cooling tower at 90°C. The droplets became solidified during the free fall and prills having the following particle size distribution were obtained:

2—4 mm 7%, 1—2 mm 78%, 0.63—1 mm 13%, <0.63 mm 2%.

Example 2

2000 grams of NPK 15-15-15 in the form of granules were warmed to 85°C in a rotating bowl, whereafter 0.15% of anti-caking agent, based on the fertilizer, were added. The rotation was continued at a constant temperature for 10 minutes and the anti-caking agent did hereby melt out completely and covered the fertilizers granules with a thin layer.

The treated fertilizer was thereafter subjected to an accelerated storage test for 68 hours with programmed temperature variations between 35 and 38°C at a relative humidity corresponding to the CRH, Critical Relative Humidity, of the fertilizer under a pressure of 150 kPa, which corresponds to a storage height of about 15 m. After storage the crush force, which is a direct measure of the caking tendency, was determined. The tendency to dusting of the treated fertilizer was determined by rotation of a sample of this in a drum for two minutes.

The treatment was carried out with different anti-caking agents according to the invention in the form of small prills. In all agents talcum was the inorganic powder material, the fatty acid was a technical stearic acid, the amine had a carbon chain length of $C_{16-18}$ and the wax was polyethylene wax. The composition of the agents were as follows:

a) 45% amine-fatty acid mixture with a mole ratio of 70:30, 15% wax, 40% talcum
b) 40% amine-fatty acid mixture with a mole ratio of 70:30, 20% wax, 40% talcum
c) 35% amine-fatty acid mixture with a mole ratio of 70:30, 25% wax, 40% talcum

3

# O 048 226

d) 45% amine-fatty acid mixture with a mole ratio of 50:50, 15% wax, 40% talcum
e) 40% amine-fatty acid mixture with a mole ratio of 50:50, 20% wax, 40% talcum
f) 35% amine-fatty acid mixture with a mole ratio of 50:50, 25% wax, 40% talcum
g) 30% amine-fatty acid mixture with a mole ratio of 50:50, 10% fatty amine, 20% wax, 40% talcum.

The results are shown in the table below.

| Anti-caking agent | Crush force N · $10^1$ | Dusting mg/kg |
|---|---|---|
| Untreated NPK | 17.1 | 13 |
| a) | 3.6 | 5 |
| b) | 4.2 | 5 |
| c) | 4.3 | 3 |
| d) | 3.1 | 2 |
| e) | 3.1 | 2 |
| f) | 3.7 | 1 |
| g) | 3.6 | 2 |

Example 3

2000 grams of NPK 21-4-10 were treated with 0.15% anti-caking agent according to the invention in the form of small prills. The treatment and the tests were carried out as in Example 2. Talcum was the inorganic material in the agents and the wax was polyethylene wax. The fatty acid was technical stearic acid and the amine had a carbon chain length of $C_{16-18}$. The agents had the following compositions:

a) 50% amine-fatty acid mixture with a mole ratio of 70:30, 20% wax, 30% talcum
b) 50% amine-fatty acid mixture with a mole ratio of 50:50, 20% wax, 30% talcum
c) 50% amine-fatty acid mixture with a mole ratio of 40:60, 20% wax, 30% talcum
d) 50% pure amine with a carbon chain length of $C_{16-18}$, 20% wax, 30% talcum (comparative exxample).

The results are shown in the table below.

| Anti-caking agent | Crush force N · $10^1$ | Dusting mg/kg |
|---|---|---|
| Untreated NPK | 16 | 24 |
| a) | 4.8 | 9 |
| b) | 3.6 | 4 |
| c) | 4.3 | 3 |
| d) comparative | 6.1 | 12 |

Example 4

2000 grams of NPK 13-13-21 were treated with 0.12% anti-caking agent according to the invention in the form of small prills. The treatment and the tests were carried out in the same manner as in Example 2. In the agents talcum was used as the inorganic material, the wax was a polyethylene wax, the fatty acid was technical stearic acid and the fatty amine had a carbon chain length of $C_{16-18}$. The compositions of the agents were as follows:

a) 45% amine-fatty acid mixture with a mole ratio of 40:60, 15% wax, 40% talcum
b) 38% amine-fatty acid mixture with a mole ratio of 50:50, 12% wax, 50% talcum
c) 52% amine-fatty acid mixture with a mole ratio of 50:50, 18% wax, 30% talcum
d) 45% amine-fatty acid mixture with a mole ratio of 50:50, 25% wax, 30% talcum.

The results are shown in the table below.

| Anti-caking agent | Crush force N · $10^1$ | Dusting mg/kg |
|---|---|---|
| Untreated NPK | 7.6 | 29 |
| a) | 1.8 | 11 |
| b) | 2.3 | 17 |
| c) | 1.8 | 9 |
| d) | 2.1 | 8 |

## Claims

1. Anti-caking agent, in the form of prills or granules or in similar particulate form, based on inorganic powder material, wax and hydrophobic organic compounds, caracterized in that it comprises

4

20 to 60 percent by weight of inorganic powder, 10 to 35 percent by weight of a wax, 0 to 20 percent by weight of a fatty amide, having at least 12 carbon atoms, the fatty amide, if present, replacing part of the wax, and 20 to 60 percent by weight of a mixture of a fatty amine having the general formula $RNH_2$ or $RNH(CH_2)_nNH_2$ wherein R is an aliphatic hydrocarbon group having at least 12 carbon atoms and n is 1—5 and a fatty acid, having at least 6 carbon atoms, whereby the mole ratio of fatty amine to fatty acid is within the range 80:20 to 30:70.

2. An agent according to claim 1, characterized in that it comprises an amine of the general formula $RNH_2$ wherein R is an aliphatic hydrophobic group with 12 to 24 carbon atoms.

3. An agent according to claim 1 or 2, characterized in that the mole ratio of fatty amine to fatty acid is within the range 70:30 to 40:60.

4. A process for the preparation of an anti-caking agent in the form of prills or granules or in similar particulate form, based on inorganic powder material, wax and hydrophobic organic compounds, according to claim 1, characterized in that, based on the final product, 10 to 35 percent by weight of a wax, 0 to 20 percent by weight of a fatty amide having at least 12 carbon atoms, the fatty amide, if present, replacing part of the wax, and 20 to 60 percent by weight of a mixture of a fatty amine having the general formula $RNH_2$ or $RNH(CH_2)_nNH_2$ wherein R is an aliphatic hydrocarbon group having at least 12 carbon atoms and n is 1—5 and a fatty acid having at least 6 carbon atoms, wherein the mole ratio of fatty amine to fatty acid is within the range 80:20 to 30:70, are mixed at a temperature above the melting point of all the components, whereafter 20 to 60 percent by weight of inorganic powder material are admixed to give an intimate molten-down mixture, which mixture is converted into particle form.

5. Use of an anti-caking agent according to claim 1 for treatment of fertilizers.

**Patentansprüche**

1. Antibackmittel in Form von Prills oder Körnchen oder in ähnlicher zerteilter Form auf Grundlage eines anorganischen Pulvermaterials, Wachs und hydrophoben organischen Verbindungen, dadurch gekennzeichnet, daß es umfaßt 20 bis 60 Gew.-% eines anorganischen Pulvers, 10 bis 35 Gew.-% eines Wachses, 0 bis 20 Gew.-% eines Fettamids mit wenigstens 12 Kohlenstoffatomen, wobei das Fettamid, falls vorhanden, einen Teil des Wachses ersetzt, und 20 bis 60 Gew.-% eines Gemisches von Fettamin mit der allgemeinen Formel $RNH_2$ oder $RNH(CH_2)_nNH_2$, worin R ein aliphatische Kohlenwasserstoffgruppe mit wenigstens 12 Kohlenstoffatomen und n 1 bis 5 ist, und einer Fettsäure mit wenigstens 6 Kohlenstoffatomen, wobei das Molverhältnis von Fettamin zu Fettsäure innerhalb des Bereichs von 80:20 bis 30:70 liegt.

2. Mittel gemäß Anspruch 1, dadurch gekennzeichnet, daß es ein Amin der allgemeinen Formel $RNH_2$ umfaßt, worin R eine aliphatische hydrophobe Gruppe mit 12 bis 24 Kohlenstoffatomen ist.

3. Mittel gemäß Anspruch 1 oder 2, dadurch gekennzeichnet, daß das Molverhältnis von Fettamin zu Fettsäure innerhalb des Bereichs 70:30 bis 40:60 liegt.

4. Verfahren zur Herstellung eines Antibackmittels in Form von Prills oder Körnchen oder in ähnlicher zerteilter Form auf Basis eines anorganischen Pulvermaterials, Wachs und hydrophoben organischen Verbindungen gemäß Anspruch 1, dadurch gekennzeichnet, daß, basierend auf dem Endprodukt, 10 bis 35 Gew.-% eines Wachses, 0 bis 20 Gew.-% eines Fettamids mit wenigstens 12 Kohlenstoffatomen, wobei das Fettamid, falls vorhanden, einen Teil des Wachses ersetzt, und 20 bis 60 Gew.-% eines Gemisches eines Fettamins der allgemeinen Formel $RNH_2$ oder $RNH(CH_2)_nNH_2$, worin R eine aliphatische Kohlenwasserstoffgruppe mit wenigstens 12 Kohlenstoffatomen und n 1 bis 5 ist, und einer Fettsäure mit minestens 6 Kohlenstoffatomen, wobei das Molverhältnis von Fettamin zu Fettsäure innerhalb des Bereichs 80:20 bis 30:70 liegt, bei einer Temperatur oberhalb des Schmelzpunkts aller Bestandteile vermischt werden, wonach 20 bis 60 Gew.-% des anorganischen Pulvermaterials hinzugemischt werden, um ein inniges zusammengeschmolzenes Gemisch zu ergeben, welches in Teilchenform überführt wird.

5. Verwendung eines Antibackmittels gemäß Anspruch 1 zur Behandlung von Düngemitteln.

**Revendications**

1. Agent anti-agglutinant sous forme de globules, de granules ou de particules similaires, à base d'une matière pulvérulente minérale, de cire et de composés organiques hydrophobes, caractérisé en ce qu'il comprend entre 20 et 60% en poids d'une poudre minérale, entre 10 et 35% en poids d'une cire, entre 0 et 20% en poids d'un amide gras ayant au moins 12 atomes de carbone, l'amide gras remplaçant, s'il est présent, une partie de la cire, et entre 20 et 60% en poids d'un mélange d'une amine grasse de formule générale $RNH_2$ ou $RNH(CH_2)_nNH_2$ dans laquelle R est un groupe hydrocarbure aliphatique ayant au moins 12 atomes de carbone et n est compris entre 1 et 5, et d'un acide gras avant au moins 6 atomes de carbone, le rapport molaire entre l'amine grasse et l'acide gras étant compris entre 80/20 et 30/70.

2. Agent selon la revendication 1, caractérisé en ce qu'il comprend une amine de formule générale $RNH_2$, où R est un groupe hydrophobe aliphatique ayant de 12 à 24 atomes de carbone.

5

3. Agent selon la revendication 1 ou 2, caractérisé en ce que le rapport molaire entre l'amine grasse et l'acide gras est compris entre 70/30 et 40/60.

4. Procédé pour la préparation d'un agent anti-agglutinant sous forme de globules, de granules ou de particules similaires, à base d'une matière pulvérulente minérale, de cire et de composés organiques hydrophobes, selon la revendication 1, caractérisé en ce qu'on mélange à une température supérieure aux points de fusion de tous les ingrédients, les quantités indiquées ci-après s'entendant rapportées au poids du produit fini, entre 10 et 35% en poids d'une cire, entre 0 et 20% en poids d'un amide gras ayant au moins 12 atomes de carbone, l'amide gras remplaçant, s'il est présent, une partie de la cire, et entre 20 et 60% en poids d'un mélange d'une amine grasse de formule générale $RNH_2$ ou $RNH(CH_2)_nNH_2$ où R est une groupe hydrocarbure aliphatique ayant au moins 12 atomes de carbone et n est compris entre 1 et 5, et d'un acide gras ayant au moins 6 atomes de carbone, dans lequel le rapport molaire entre l'amine grasse et l'acide gras est compris entre 80/20 et 30/70, après quoi on incorpore encore entre 20 et 60% en poids de la matière pulvérulente minérale; afin d'obtenir un mélange intime fondu qu'on met sous forme de particules.

5. Utilisation de l'agent anti-agglutinant selon la revendication 1 pour le traitement d'engrais.